(19) Europäisches Patentamt

European Patent Office

Office européen des brevets

(11) **EP 1 010 884 B1**

(12) **FASCICULE DE BREVET EUROPEEN**

(45) Date de publication et mention
de la délivrance du brevet:
**19.07.2006 Bulletin 2006/29**

(51) Int Cl.:
**F02K 1/82** (2006.01)

(21) Numéro de dépôt: **99403129.2**

(22) Date de dépôt: **14.12.1999**

(54) **Dispositif d'échappement multicanal de turbomachine traité acoustiquement**

Akustich verkleideter Mehrring-Abgaskanal für Turbomaschinen

Turbomachine multi-annular exhaust duct with acoustic lining

(84) Etats contractants désignés:
**AT BE CH CY DE DK ES FI FR GB GR IE IT LI LU
MC NL PT SE**

(30) Priorité: **17.12.1998 FR 9815942**

(43) Date de publication de la demande:
**21.06.2000 Bulletin 2000/25**

(73) Titulaire: **Turbomeca**
**64511 Bordes Cedex (FR)**

(72) Inventeurs:
• **Gadefait, Benoît Denis René**
**64000 Pau (FR)**

• **Vignau, Hubert Hippolyte**
**64800 Nay (FR)**
• **Ortiz-Devaux, Marie-Laure Olga Simone**
**64420 Artigueloutan (FR)**

(74) Mandataire: **Casalonga, Axel**
**Bureau Casalonga & Josse**
**Bayerstrasse 71/73**
**80335 München (DE)**

(56) Documents cités:
| | |
|---|---|
| **US-A- 3 721 389** | **US-A- 3 831 376** |
| **US-A- 3 848 697** | **US-A- 3 890 060** |
| **US-A- 4 109 750** | **US-A- 4 244 441** |

## EP 1 010 884 B1

**Description**

La présente invention a pour objet un dispositif d'échappement pour une turbomachine tel qu'un groupe auxiliaire de puissance, un turbogénérateur, un ventilateur, un compresseur de charge, un turbopropulseur ou encore un turbomoteur capable d'entraîner par exemple un arbre de rotor d'hélicoptère, le dispositif d'échappement étant traité de façon que sa signature acoustique soit réduite.

On sait que les turbomachines sont équipées d'un dispositif d'échappement jouant le rôle d'un diffuseur capable de ralentir le flux d'échappement. Un tel dispositif d'échappement comprend généralement une enveloppe extérieure de forme symétrique par rapport à un axe. La forme exacte du dispositif d'échappement ainsi que sa longueur selon l'axe du flux d'échappement peuvent être déterminées de façon à assurer des performances données en tenant compte en particulier de la pression statique à l'entrée et à la sortie du dispositif d'échappement.

On a déjà prévu, dans des dispositifs d'échappement pour turbomachines, de disposer à l'intérieur de l'enveloppe une ou plusieurs séparations internes définissant plusieurs canaux sensiblement concentriques pour l'écoulement du flux d'échappement. Le dispositif d'échappement multicanal ainsi réalisé présente, à performances égales, un encombrement axial réduit.

On sait par ailleurs qu'il convient dans de nombreuses applications, de réduire au maximum le bruit généré par les turbomachines. A cet effet, un traitement acoustique du dispositif d'échappement a pu être envisagé. Jusqu'à présent cependant, la diminution de la signature acoustique était considérée comme insuffisante. Le document US-A-4 109 750 décrit un dispositif d'atténuation du son pour turbomachine au moyen de l'utilisation d'un matériau acoustique qui peut être appliqué sur les parois d'une séparation interne. Mais cette application se fait au détriment des performances aérodynamiques.

Une autre application est décrit dans le document US-A-3 721 389.

La présente invention a pour objet d'améliorer la réduction de la signature acoustique d'une turbomachine tout en autorisant l'obtention de performances aérodynamiques données d'un dispositif d'échappement. De manière plus précise, la présente invention permet d'améliorer à la fois les performances aérodynamiques et les performances acoustiques d'un dispositif d'échappement d'une turbomachine, et en particulier d'un turbomoteur d'entraînement de rotor d'hélicoptère.

A cet effet, le dispositif d'échappement de diffusion de turbomachine selon l'invention, qui est du type multicanal à entrée annulaire, comprend une enveloppe extérieure de forme générale symétrique par rapport à un axe et une ou plusieurs séparations internes définissant plusieurs canaux sensiblement concentriques pour l'écoulement du flux d'échappement. Conformément à la présente invention, un revêtement absorbant capable d'absorber une partie de l'énergie acoustique générée par l'écoulement, est prévu sur au moins une surface d'une séparation interne et/ou sur la surface interne de l'enveloppe extérieure. L'épaisseur du revêtement absorbant est adaptée sur la longueur du dispositif d'échappement pour optimiser l'écoulement dans les différents canaux, en maintenant la diffusion progressive et en évitant les décollements au voisinage des surfaces immobiles.

Grace à cette disposition, la signature acoustique de la turbomachine est grandement réduite puisqu'il devient possible de bénéficier de l'augmentation de surface traitée acoustiquement due à la présence des séparations internes.

Le revêtement absorbant est choisi non seulement en fonction de son pouvoir absorbant propre, caractérisé par son coefficient d'absorption en fonction de la fréquence, mais également en fonction des caractéristiques de l'écoulement aérodynamique (température des gaz dans l'échappement et vitesse d'écoulement).

Afin d'optimiser les performances aérodynamiques, l'aire des différents canaux peut avantageusement varier sur la longueur de l'axe afin d'optimiser simultanément la vitesse d'écoulement et l'épaisseur du revêtement absorbant, c'est-à-dire les performances acoustiques.

Le revêtement absorbant est disposé sur la surface de la séparation interne et/ou de l'enveloppe extérieure faisant face à l'écoulement.

Le revêtement absorbant comprend un matériau acoustique qui peut être du type poreux ou du type résonateur en simple ou en multicouches.

Dans le cas d'un matériau poreux, celui-ci peut être constitué de fibres agglomérées (feutre, laine de verre ou de roche) ou d'un réseau intersticiel réalisé par assemblage de microsphères creuses. Dans le cas d'un tel matériau poreux, le revêtement absorbant comprend en outre une paroi acoustiquement transparente ayant un rôle de retenue mécanique du matériau poreux. Cette paroi peut être solidaire ou non du matériau poreux.

Lorsqu'un corps central est prévu dans l'axe du dispositif sur une majeure partie de sa longueur, ledit corps central peut également présenter sur sa surface un revêtement absorbant tel que défini précédemment, ce qui augmente encore la surface traitée acoustiquement.

De la même manière, si la sortie du flux d'échappement se fait par une partie de déviation du flux par rapport à l'axe d'entrée, ladite partie de déviation, de forme quelconque, peut comporter sur sa surface interne un revêtement absorbant.

La présente invention sera mieux comprise à l'étude de quelques modes de réalisation particuliers pris à titre d'exemples nullement limitatifs et illustrés par les dessins annexés, sur lesquels :

la figure 1 est une vue en coupe schématique prise selon l'axe de l'écoulement, d'un mode de réalisation d'un dispositif d'échappement de turbomachine selon l'invention;

La figure 2 est une vue avec arrachement en coupe montrant à plus grande échelle une première variante de revêtement absorbant installé dans le mode de réalisation illustré sur la figure 1;

la figure 3 est une vue en coupe avec arrachement analogue à la figure 2, d'une variante de revêtement absorbant;

la figure 4 est une vue analogue aux figures 2 et 3, montrant une autre variante de revêtement absorbant;

la figure 5 est une vue en coupe selon V-V de la figure 4;

la figure 6 est une vue en coupe partielle avec arrachement d'une modification de la variante illustrée sur la figure 4;

la figure 7 est une vue en coupe schématique analogue à la figure 1 d'un autre mode de réalisation de l'invention; et

la figure 8 est un schéma illustrant les performances aérodynamiques d'un dispositif d'échappement.

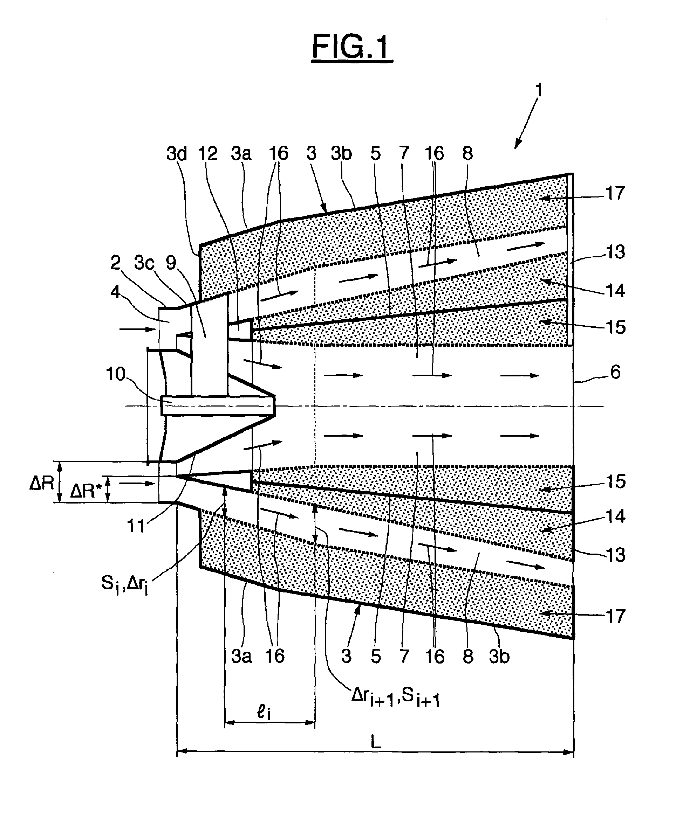

Tel qu'il est illustré sur la figure 1, le dispositif d'échappement de turbomachine selon la présente invention, référencé 1 dans son ensemble, est monté sur l'extrémité de sortie 2 d'un turbomoteur non représenté sur la figure. Le dispositif d'échappement 1 comprend d'une manière générale une enveloppe extérieure 3 qui présente, dans l'exemple illustré, une forme générale tronconique divergente. A l'intérieur de l'enveloppe 3, se trouve montée une séparation 5, laquelle présente, dans l'exemple illustré, également une forme générale tronconique divergente. L'enveloppe 3 présente une première partie 3a du côté de l'entrée 4, correspondant à la sortie du turbomoteur, avec un premier angle de cône et une deuxième partie 3b du côté de la sortie 6 avec un autre angle de cône plus fermé.

La séparation 5 définit un premier canal central 7 pour l'écoulement du flux d'échappement et un deuxième canal annulaire 8 entre la séparation 5 et l'enveloppe extérieure 3, le canal annulaire 8 étant concentrique au canal central 7.

Le maintien de la séparation 5 à l'intérieur de l'enveloppe 3 est réalisé au voisinage de l'entrée 4 par trois bras-support radiaux 9 avantageusement disposés à 120° les uns des autres, lesdits bras-support 9 étant fixés, d'une part sur un tube interne 10 du cône intérieur 11 et, d'autre part sur un retour 3c de l'enveloppe extérieure 3. La séparation 5 est prolongée du côté de l'entrée 4 par une pièce de liaison conique 12, laquelle est fixée sur les bras-support 9. Le sommet du cône de la pièce de liaison qui constitue le bord d'attaque de la séparation 5, est dans le plan de l'entrée 4, correspondant à la sortie du turbomoteur.

Du côté de la sortie 6, la séparation 5 est maintenue au moyen de bras-support 13 fixés à la fois sur la séparation 5 et sur l'enveloppe extérieure 3 et également disposés à 120° les uns des autres.

Conformément à la présente invention, un revêtement absorbant 14 est prévu sur la surface de la séparation interne 5.

Dans le mode de réalisation illustré sur la figure 1, le revêtement absorbant 14 est disposé sur la surface externe de la séparation 5, tandis qu'un revêtement absorbant analogue 15 est prévu sur la surface interne de la séparation 5. Ce revêtement absorbant est capable d'absorber une partie de l'énergie acoustique générée par l'écoulement symbolisé sur la figure 1 par les flèches 16. L'épaisseur des revêtements 14 et 15 va en croissant depuis la pièce de liaison 12 jusqu'à la sortie 6.

Dans le mode de réalisation illustré sur la figure 1, la surface interne de l'enveloppe extérieure 3 présente également un revêtement absorbant 17 de structure analogue à celle des revêtements absorbants 14 et 15. Le revêtement absorbant 17 définit la surface externe du canal annulaire 8. L'enveloppe 3 présente donc un décrochement 3d, correspondant à l'épaisseur du revêtement 17 au voisinage de l'entrée 4 et dirigé vers l'extérieur.

Les différents revêtements absorbants 14, 15 et 17 peuvent présenter des caractéristiques d'absorption différentes sur la longueur du dispositif d'échappement 1. De même, l'épaisseur de chacun des revêtements absorbants 14, 15 et 17 peut évoluer sur la longueur du dispositif d'échappement. C'est ainsi que l'épaisseur des revêtements absorbants 14 et 15 va en augmentant depuis le côté de l'entrée 4 jusqu'au côté de la sortie 6. L'épaisseur du revêtement absorbant 17 est sensiblement constante sur toute la longueur du dispositif d'échappement 1 dans le mode de réalisation illustré sur la figure 1. Il en résulte que la section de passage utile pour l'écoulement du flux gazeux d'échappement qui s'écoule par le canal annulaire 8 d'une part et le canal central 7 d'autre part, peut être adaptée de façon à optimiser l'écoulement dont la diffusion reste avantageusement progressive et ne décolle pas au voisinage des surfaces immobiles.

Dans la variante illustrée sur la figure 1, la section de passage du canal central 7 est sensiblement constante, tandis que la section de passage du canal annulaire 8 va en croissant depuis l'entrée jusqu'à la sortie 6 grâce à l'augmentation de diamètre du canal 8.

Dans tous les cas, la forme géométrique de la séparation interne devra être adaptée à l'épaisseur des revêtements absorbants 14, 15 et 17 afin que la section de passage utile du flux gazeux permette la meilleure récupération possible d'énergie en maintenant la pression la plus basse possible à l'entrée de l'échappement, c'est-à-dire à la sortie du turbomoteur par un effet de ralentissement approprié du flux gazeux dans le dispositif d'échappement.

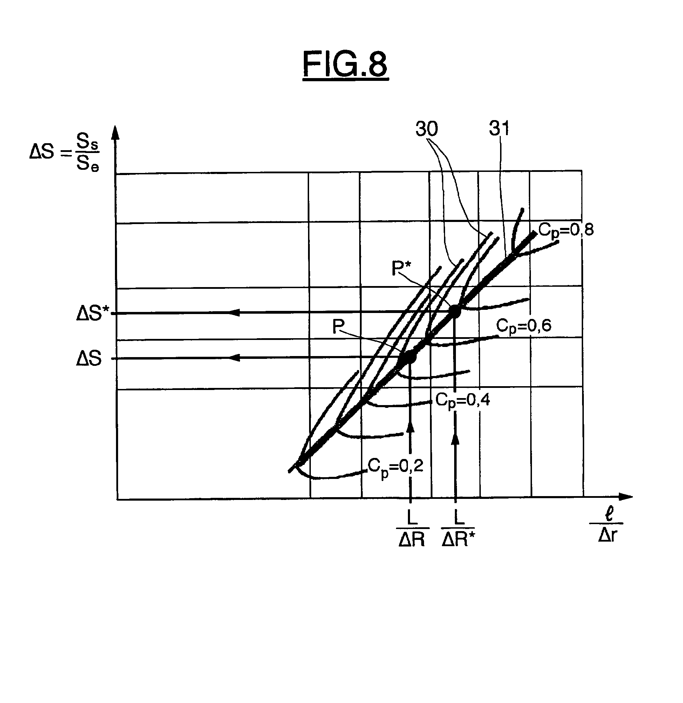

La figure 8 illustre les performances aérodynamiques d'un dispositif d'échappement tel que celui illustré sur la figure 1. Le graphe de la figure 8 comporte en ordonnée le rapport $\Delta S = S_s/S_e$ entre la surface utile $S_s$ pour le passage du flux gazeux à la sortie d'une section du dispositif d'échappement et la surface de passage utile Se de l'entrée d'une autre section. En abscisses, on porte les valeurs $\ell/\Delta r$ où $\ell$ est la longueur axiale entre les deux sections considérées du dispositif d'échappement et $\Delta r$ la différence entre le rayon externe et le rayon interne de la section annulaire d'entrée. La longueur totale de l'échappement illustré à la figure 1 est L, la hauteur de veine à l'entrée étant $\Delta R$.

On a également représenté sur la figure 8 une pluralité de courbes 30 représentatives du coefficient de récupération de pression statique $C_p$ où :

$$C_p = -\frac{\text{pression statique de sortie - pression statique d'entrée}}{(\text{pression totale - pression statique})_{\text{entrée}}}$$

Pour une vitesse donnée de l'écoulement du flux gazeux, il est alors possible de définir une ligne de performance optimale joignant les différents minimas des courbes représentatives du coefficient de récupération de pression statique $C_p$. Cette ligne est référencée 31 sur la figure 8. Elle permet de déterminer pour un dispositif d'échappement de longueur L et de hauteur de veine à l'entrée $\Delta R$, la section de sortie fournissant les performances maximales de l'échappement.

L'optimisation de ce dispositif d'échappement est effectuée itérativement sur des sections intermédiaires. La section $S_{i+1}$ indiquée sur la figure 1 est déterminée en fonction de la section $S_i$, de la distance $\ell_i$ entre les sections d'entrée i et de sortie i+1 et de la valeur $\Delta r_i$.

Par ailleurs, la présence de la séparation 5, d'épaisseur initiale nulle et d'épaisseur évolutive sur la longueur de l'échappement, permet de diviser la hauteur de veine à l'entrée ($\Delta R$ devient $\Delta R^*$), et donc conformément à la courbe 31 (point P*), d'augmenter la section de sortie ($\Delta S$ devient $\Delta S^*$) avec tous les autres paramètres inchangés.

La séparation 5 munie de ses revêtements 14 et 15 permet donc, à même encombrement axial, d'améliorer les performances aérodynamiques du dispositif d'échappement. Cette optimisation est indépendante de l'évolution d'épaisseur de la séparation 5 munie des revêtements 14 et 15 librement choisie pour l'optimisation acoustique.

La séparation 5 munie de ses revêtements 14 et 15, permet donc une amélioration combinée des performances aérodynamique et acoustique.

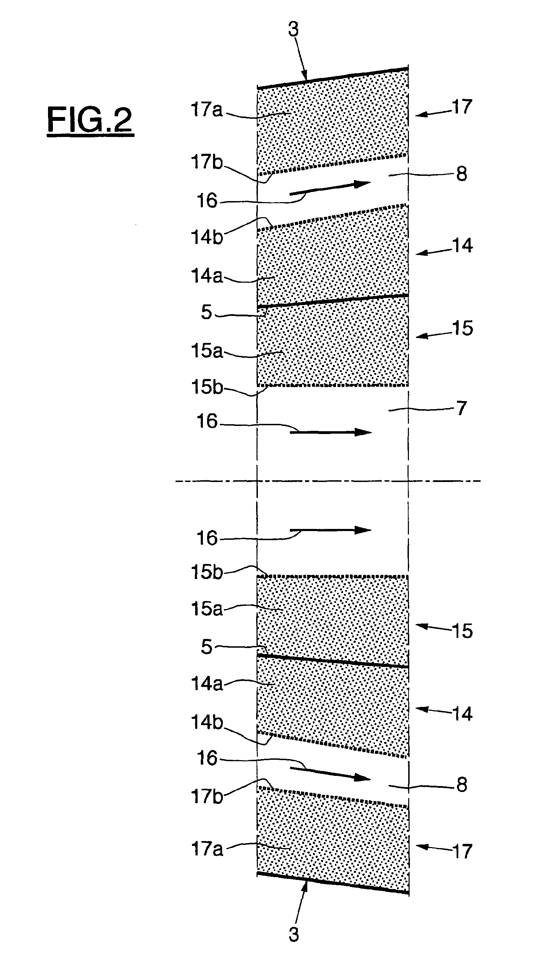

En se reportant à la figure 2, il apparaît que dans une première variante, le revêtement absorbant 14, 15, 17 utilisé dans la présente invention comprend chaque fois une couche d'absorption acoustique 14a, 15a ou 17a et une paroi 14b, 15b ou 17b acoustiquement transparente. La paroi acoustiquement transparente peut être par exemple une paroi métallique munie d'une pluralité d'orifices traversants, schématiquement représentée sur la figure sous la forme d'un trait en pointillés. La couche d'absorption acoustique 14a, 15a ou 17a est constituée dans la variante représentée sur la figure 2 sous la forme d'un matériau fibreux qui dissipe l'énergie des ondes sonores par frottement visqueux des gaz dans les pores du matériau. Dans chacun des revêtements absorbants 14, 15 et 17, le matériau fibreux se trouve ainsi maintenu en sandwich entre une paroi pleine rigide telle que la paroi de la séparation interne 5 ou la paroi de l'enveloppe extérieure 3 d'une part, et la paroi acoustiquement transparente 14b, 15b ou 17b. La paroi acoustiquement transparente 14b, 15b ou 17b est disposée du côté de l'écoulement symbolisé par les flèches 16 sur la figure. Le matériau fibreux 14a, 15a ou 17a peut être avantageusement constitué de laine de roche, laine de verre, fibres céramiques ou d'un produit analogue capable de résister aux températures élevées régnant dans le flux d'échappement.

Lors du fonctionnement de la turbomachine, le flux d'échappement s'écoule dans les canaux 7 et 8. Le traitement acoustique obtenu est efficace sur une large plage de fréquences en raison de la nature même de la couche d'absorption acoustique 14a, 15a ou 17a constituée par le matériau fibreux.

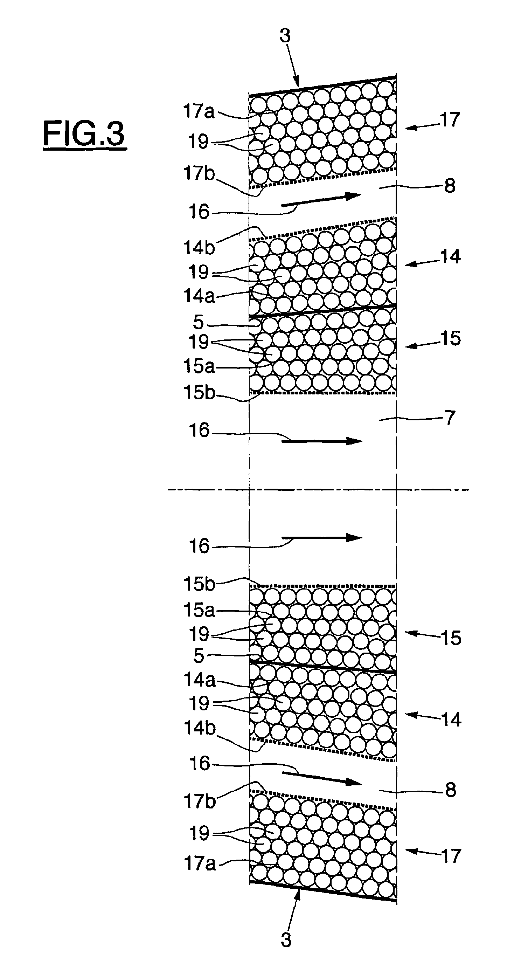

Dans le mode de réalisation illustré sur la figure 3, sur laquelle les parties analogues portent les mêmes références, les couches d'absorption acoustiques 14a, 15a et 17a sont constituées par un lit de sphères 19 perforées réalisées en matériau réfractaire et accumulées en vrac ou selon plusieurs couches superposées délimitant le revêtement absorbant, c'est-à-dire en particulier entre la paroi extérieure 3 et la paroi acoustiquement transparente 17b, la paroi de la séparation interne 5 et les deux parois acoustiquement transparentes 14b et 15b.

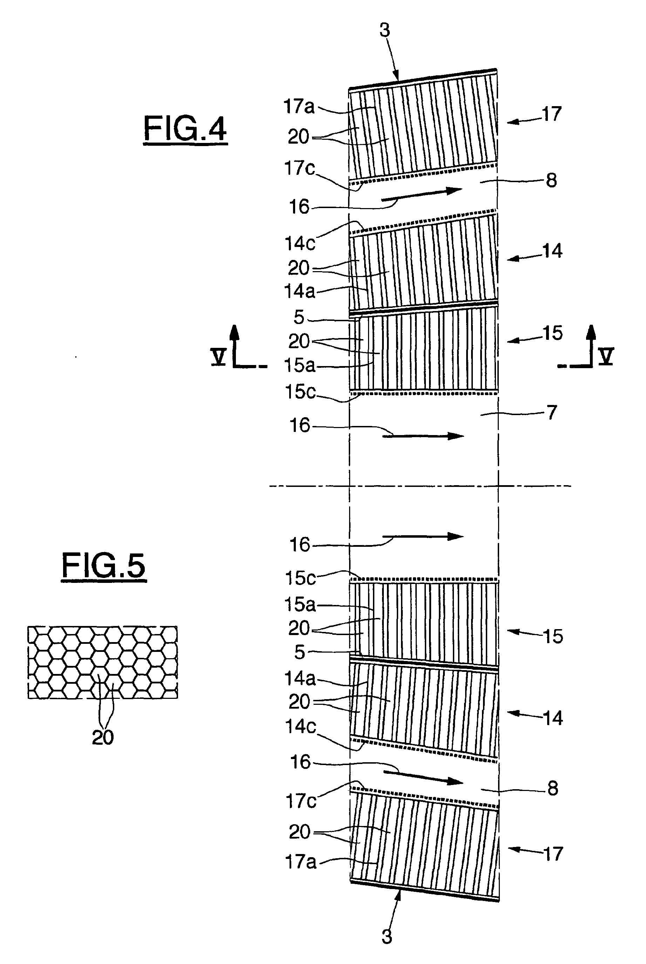

Dans le mode de réalisation illustré sur les figures 4 et 5, le revêtement absorbant 14, 15 et 17 est constitué de panneaux 14a, 15a, 17a ayant une structure de résonateurs représentée ici sous la forme de résonateurs d'Helmholtz. Les cavités ou cellules ouvertes 20 ont la forme de cylindres de base hexagonale comme on peut le voir sur la coupe de la figure 5, formant ainsi une structure en nid d'abeille. L'axe des cellules 20 est, dans cet exemple et à titre illustratif, sensiblement perpendiculaire à la direction de l'écoulement. D'un côté, cette structure est soudée à une paroi pleine rigide telle que celle de l'enveloppe extérieure 3 ou la séparation interne 5, définissant ainsi un fond fermé pour les différentes cavités ou cellules 20. De l'autre côté, est disposée une paroi poreuse acoustiquement résistive 14c, 15c ou 17c.

La paroi 14c, 15c ou 17c comprend généralement une couche relativement mince d'un matériau capable de dissiper l'énergie des ondes sonores par frottement visqueux des gaz dans les pores du matériau.

En variante, on peut remplacer au moins l'une des parois 14c, 15c ou 17c par une simple tôle perforée.

De cette manière, comme précédemment, le revêtement absorbant 14, 15 ou 17 permet, lors de l'écoulement du flux d'échappement, la création d'un mouvement des gaz à travers les pores de la paroi 14c, 15c ou 17c engendrant un amortissement résistif par dissipation de l'énergie sonore. On peut renforcer cet amortissement en prenant judicieusement une profondeur pour les cavités ou cellules 20 multiple du quart de la longueur d'onde.

Il est ainsi possible d'obtenir un amortissement acoustique à une fréquence déterminée dépendant de la profondeur des cavités ou cellules 20. L'amortissement acoustique dépend également d'autres paramètres tels que la température des gaz de l'écoulement ainsi que la vitesse de l'écoulement. On comprendra que la structure du revêtement absorbant et en particulier l'épaisseur des couches d'absorption acoustiques 14a, 15a ou 17a, c'est-à-dire la profondeur des cavités ou cellules 20 de la structure cellulaire illustrée sur les figures 4 et 5, puissent être aisément adaptées en fonction des paramètres de fonctionnement de la turbomachine.

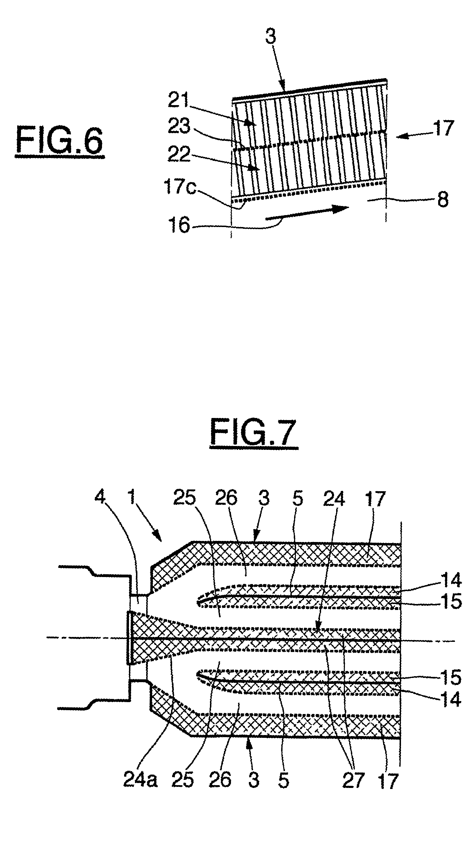

La figure 6 illustre un exemple de modification de la structure cellulaire illustré sur la figure 4, pour le revêtement absorbant 17.

Dans cet exemple, on utilise un double résonateur constitués de deux résonateurs superposés représentés ici sous la forme de résonateurs d'Helmholtz. Une paroi poreuse 23 est insérée entre deux couches 21 et 22 et cavités ou cellules ouvertes 20. Dans l'exemple illustré, la profondeur des cavités ou cellules des deux couches 21 et 22 est identique, mais il serait possible au contraire de prévoir des profondeurs différentes. Le double résonateur d'Helmholtz est associé, du côté de l'écoulement, à une paroi poreuse 17c acoustiquement résistive identique à celle du mode de réalisation précédent.

Les parois poreuses 17c et 23 peuvent être identiques et constituer les parois résistives des deux résonateurs. Les ondes sonores pénètrent alors dans le premier résonateur comprenant la paroi poreuse 17c et les cavités de la couche 22, puis dans le second résonateur comprenant la paroi poreuse 23 et les cavités de la couche 21.

En variante, la paroi 23 peut être constituée simplement d'un matériau poreux acoustiquement peu ou pas résistif. La paroi 23 peut également être constituée d'une simple tôle perforée.

Un tel revêtement absorbant à double résonateur d'Helmholtz présente l'avantage d'étendre l'accord en fréquence sur une bande plus large que dans le cas d'une seule rangée de résonateurs.

Le mode de réalisation illustré sur la figure 7 illustre schématiquement le cas d'un échappement 1 comportant un corps central 24 s'étendant essentiellement sur toute la longueur de l'échappement 1. Le corps central présente du côté de l'entrée 4 une forme conique 24a dont la section va en diminuant dans le sens de l'écoulement. Une séparation de forme sensiblement conique 5 puis cylindrique est montée à l'intérieur de l'échappement 1 entre le corps central 24 et la paroi extérieure 3. Deux canaux d'écoulement sensiblement annulaires et concentriques 25 et 26 se trouvent ainsi définis à l'intérieur de l'échappement 1 dont la forme générale est tout d'abord conique puis approximativement cylindrique.

Un revêtement acoustiquement absorbant est prévu sur toutes les surfaces internes de l'échappement 1, en contact avec le flux d'écoulement gazeux. Ce revêtement peut être identique à celui décrit en référence à l'un quelconque des modes de réalisation précédents. C'est ainsi qu'un revêtement 17 est prévu à l'intérieur de la paroi extérieure 3. De même, un revêtement acoustiquement absorbant 14, 15 est prévu de chaque côté de la paroi pleine de la séparation interne 5. Enfin, un revêtement acoustiquement absorbant 27 est prévu tout autour du corps central 24.

L'échappement multicanal de turbomachine selon la présente invention est ainsi traité acoustiquement et ce quelle que soit sa géométrie, l'entrée étant généralement symétrique par rapport à l'axe de l'écoulement, les canaux concentriques d'écoulement pouvant évoluer vers une forme de sortie quelconque, soit dans l'axe moteur, soit en dehors de cet axe en exerçant ainsi une fonction de déviation du jet.

La séparation prévue à l'intérieur du dispositif d'échappement délimitant les canaux d'écoulement, peut comporter un revêtement acoustiquement absorbant d'épaisseur évolutive ou uniforme selon les caractéristiques acoustiques que l'on souhaite obtenir. Les hauteurs de veine des différents canaux d'écoulement peuvent être optimisées afin que les vitesses d'écoulement dans chaque canal soient adaptées à la surface acoustiquement traitée et que les performances acoustiques soient les meilleures possibles.

Bien que dans les exemples illustrés, l'enveloppe extérieure comme la séparation interne aient été munies d'un revêtement acoustiquement absorbant, on comprendra que l'invention s'applique également au cas où seule la séparation interne serait munie d'un tel revêtement acoustiquement absorbant. L'invention s'appliquerait également dans les mêmes conditions à une structure dans laquelle la séparation interne ne serait pas revêtue d'un revêtement acoustiquement absorbant, mais où ce revêtement serait prévu uniquement à l'intérieur de l'enveloppe externe de l'échappement.

Par ailleurs, bien que dans les modes de réalisation illustrés, les revêtements acoustiquement absorbants aient été de même structure dans un mode de réalisation déterminé, on comprendra qu'il serait possible pour obtenir des caractéristiques différentes, de prévoir dans le même échappement des structures différentes de revêtement acoustiquement absorbant en des endroits différents, de façon à répondre à des conditions de traitement acoustique spécifiques.

Grâce à la présente invention, il devient possible de réduire de manière très significative la signature acoustique de l'échappement et donc de la turbomachine.

Grâce à l'existence de la séparation interne, la surface de traitement acoustique peut être considérablement accrue en gardant le même encombrement et des performances aérodynamiques égales ou supérieures. On peut également améliorer la compacité de l'ensemble en réalisant un échappement de moindre longueur tout en conservant une surface de traitement acoustique optimale.

**Revendications**

1.  Dispositif d'échappement de diffusion multicanal de turbomachine, du type à entrée (4) annulaire, comprenant une enveloppe extérieure (3) de forme générale symétrique par rapport à un axe et une ou plusieurs séparations internes (5) définissant plusieurs canaux (7, 8) sensiblement concentriques pour l'écoulement du flux d'échappement, un revêtement absorbant (14, 15, 17) capable d'absorber une partie de l'énergie acoustique générée par l'écoulement étant prévu sur au moins une surface d'une séparation interne (5) et/ou sur la surface interne de l'enveloppe extérieure (3), **caractérisé par le fait que** l'épaisseur du revêtement absorbant varie sur la longueur du dispositif d'échappement de façon que la section de passage utile pour l'écoulement du flux gazeux d'échappement aille en croissant depuis l'entrée jusqu'à la sortie pour optimiser l'écoulement dans les différents canaux en maintenant la diffusion progressive et en évitant les décollements au voisinage des surfaces immobiles.

2.  Dispositif d'échappement selon la revendication 1, **caractérisé par le fait que** le revêtement absorbant présente des caractéristiques d'absorption différentes selon la nature de l'écoulement en regard.

3.  Dispositif d'échappement selon les revendications 1 ou 2, **caractérisé par le fait que** l'aire des différents canaux (7, 8) varie sur la longueur de l'axe de façon à optimiser simultanément la vitesse d'écoulement et l'épaisseur du revêtement absorbant.

4.  Dispositif d'échappement selon l'une quelconque des revendications précédentes, **caractérisé par le fait que** le revêtement absorbant (14, 15, 17) est disposé sur la surface de la séparation interne (5) et/ou de l'enveloppe extérieure (3) qui fait face à l'écoulement.

5.  Dispositif d'échappement selon l'une quelconque des revendications précédentes, **caractérisé par le fait que** le revêtement absorbant comprend un matériau acoustique (14a, 15a, 17a) du type poreux ou du type résonateur.

6.  Dispositif d'échappement selon la revendication 5, **caractérisé par le fait que** le matériau acoustique est un matériau fibreux tel que laine de verre, laine de roche, fibres céramiques.

7.  Dispositif d'échappement selon la revendication 5, **caractérisé par le fait que** le matériau acoustique comprend une pluralité de microsphères creuses (19) disposées en une ou plusieurs couches ou en vrac.

8.  Dispositif d'échappement selon l'une des revendications 6 ou 7, **caractérisé par le fait que** le revêtement absorbant comprend une paroi acoustiquement transparente (14b, 15b, 17b) capable de retenir le matériau acoustique.

9.  Dispositif d'échappement selon la revendication 5, **caractérisé par le fait que** le matériau acoustique est du type résonateur avec une structure de cellules ouvertes (20) associée à une paroi poreuse acoustiquement résistive (14c, 15c, 17c) et fermée de l'autre côté par une paroi de fond rigide.

10. Dispositif d'échappement selon la revendication 9, **caractérisé par le fait que** le matériau acoustique comprend plusieurs couches de résonateurs superposées (21, 22) d'épaisseurs différentes ou identiques, une paroi poreuse (23) étant insérée entre deux couches adjacentes.

11. Dispositif d'échappement selon l'une quelconque des revendications précédentes, **caractérisé par le fait qu'**un corps central (24) est prévu dans l'axe du dispositif, sur une majeure partie de sa longueur, ledit corps central présentant sur sa surface un revêtement absorbant tel que défini dans les revendications précédentes.

12. Dispositif d'échappement selon l'une quelconque des revendications précédentes, **caractérisé par le fait que** la sortie du flux d'échappement se fait par une partie de déviation du flux par rapport à l'axe d'entrée, ladite partie de déviation, de forme quelconque, pouvant comporter sur sa surface interne un revêtement absorbant tel que défini dans les revendications précédentes.

**Claims**

1. Multi-duct diffusion exhaust device for a turbomachine, of the type with an annular inlet (4), comprising an outer casing (3) shaped symmetrically overall with respect to an axis, and one or more internal partitions (5) defining several roughly concentric ducts (7, 8) for the exhaust stream to flow through, an absorbent coating (14, 15, 17), capable of absorbing some of the acoustic energy generated by the flow being provided on at least one surface of one internal partition (5) and/or on the interior surface of the outer casing (3), **characterized in that** the thickness of the absorbent coating varies along the length of the exhaust device so that the useful flow area for the flow of the exhaust gas stream increases from the inlet to the outlet in order to optimize the flow in the various ducts by maintaining progressive diffusion and avoiding detachment near the stationary surfaces.

2. Exhaust device according to Claim 1, **characterized in that** the absorbent coating exhibits absorption characteristics which differ according to the nature of the flow past it.

3. Exhaust device according to Claim 1 or 2, **characterized in that** the area of the various ducts (7, 8) varies along the length of the axis so as simultaneously to optimize the flow speed and the thickness of the absorbent coating.

4. Exhaust device according to any one of the preceding claims, **characterized in that** the absorbent coating (14, 15, 17) is arranged on the surface of the internal partition (5) and/or the outer casing (3) facing the flow.

5. Exhaust device according to any one of the preceding claims, **characterized in that** the absorbent coating comprises an acoustic material (14a, 15a, 17a) of the porous type or of the resonator type.

6. Exhaust device according to Claim 5, **characterized in that** the acoustic material is a fibrous material such as glasswool, rockwool, or ceramic fibres.

7. Exhaust device according to Claim 5, **characterized in that** the acoustic material comprises a number of hollow microspheres (19) arranged in one or more layers or loosely.

8. Exhaust device according to one of Claims 6 and 7, **characterized in that** the absorbent coating comprises an acoustically transparent wall (14b, 15b, 17b) capable of retaining the acoustic material.

9. Exhaust device according to Claim 5, **characterized in that** the acoustic material is of the resonator type with an open-cell structure (20) associated with an acoustically resistive porous wall (14c, 15c, 17c) and closed on the other side by a rigid base wall.

10. Exhaust device according to Claim 9, **characterized in that** the acoustic material comprises several superimposed layers (21, 22) of resonators of different or the same thickness, a porous wall (23) being inserted between two adjacent layers.

11. Exhaust device according to any one of the preceding claims, **characterized in that** there is a central body (24) along the axis of the device over most of its length, the said central body having on its surface an absorbent coating as defined in the preceding claims.

12. Exhaust device according to any one of the preceding claims, **characterized in that** the exhaust stream is let out through a part which deflects the stream with respect to the inlet axis, it being possible for the said deflecting part, which is of any shape, to have on its interior surface an absorbent coating as defined in the preceding claims.

**Patentansprüche**

1. Mehrkanalvorrichtung zur Ablassverbreitung einer Turbomaschine vom Typ mit einem ringförmigen Eingang (4), umfassend eine äußere Hülle (3) von allgemeiner symmetrischer Form in Bezug eine Achse und eine oder mehrere innere Abtrennungen (5), die mehrere im Wesentlichen konzentrische Kanäle (7, 8) für das Abfließen des Ablassflusses definieren, wobei eine absorbierende Verkleidung (14, 15, 17), die einen Teil der akustischen Energie, die vom Abfließen erzeugt wird, absorbieren kann, auf mindestens einer Fläche einer inneren Abtrennung (5) und/oder auf der Innenfläche der äußeren Hülle (3) vorgesehen ist, **dadurch gekennzeichnet, dass** die Dicke der absorbierenden Verkleidung auf der Länge der Ablassvorrichtung variiert, so dass der Durchgangsnutzquerschnitt für das Abfließen des gasförmigen Ablassflusses vom Eingang bis zum Ausgang größer wird, um das Abfließen in den verschiedenen Kanälen zu optimieren, wobei die progressive Verbreitung beibehalten und die Ablösungen in der Nähe der unbeweglichen Flächen vermieden werden.

2. Vorrichtung nach Anspruch 1, **dadurch gekennzeichnet, dass** die absorbierende Verkleidung je nach der Natur des gegenüber liegenden Abflusses unterschiedliche Absorptionseigenschaften aufweist.

3. Vorrichtung nach den Ansprüchen 1 oder 2, **dadurch gekennzeichnet, dass** der Querschnitt der verschiedenen Kanäle (7, 8) auf der Länge der Achse variiert, um gleichzeitig die Fließgeschwindigkeit und die Dicke der absorbierenden Verkleidung zu optimieren.

4. Vorrichtung nach einem der vorhergehenden Ansprüche, **dadurch gekennzeichnet, dass** die absorbierende Verkleidung (14, 15, 17) auf der Fläche der inneren Abtrennung (5) und/oder der äußeren Hülle (3), die dem Abfluss gegenüber liegt, angeordnet ist.

5. Vorrichtung nach einem der vorhergehenden Ansprüche, **dadurch gekennzeichnet, dass** die absorbierende Verkleidung ein akustisches Material (14a, 15a, 17a) porösen Typs oder vom Typ Resonator umfasst.

6. Vorrichtung nach Anspruch 5, **dadurch gekennzeichnet, dass** das akustische Material ein faseriges Material, wie beispielsweise Glaswolle, Steinwolle, Keramikfasern, ist.

7. Vorrichtung nach Anspruch 5, **dadurch gekennzeichnet, dass** das akustische Material eine Vielzahl von hohlen Mikrosphären (19) umfasst, die ein einer oder mehreren Schichten oder lose angeordnet sind.

8. Vorrichtung nach einem der Ansprüche 6 oder 7, **dadurch gekennzeichnet, dass** die absorbierende Verkleidung eine akustisch transparente Wand (14b, 15b, 17b) umfasst, die das akustische Material zurückhalten kann.

9. Vorrichtung nach Anspruch 5, **dadurch gekennzeichnet, dass** das akustische Material vom Typ Resonator mit einer offenen Zellstruktur (20) in Verbindung mit einer akustisch widerstandsfähigen porösen Wand (14c, 15c, 17c), der auf der anderen Seite durch eine starre Bodenwand verschlossen ist, ist.

10. Vorrichtung nach Anspruch 9, **dadurch gekennzeichnet, dass** das akustische Material mehrere übereinander liegende Resonatorschichten (21, 22) von unterschiedlicher oder identischer Dicke umfasst, wobei eine poröse Wand (23) zwischen zwei aneinander grenzenden Schichten vorgesehen ist.

11. Vorrichtung nach einem der vorhergehenden Ansprüche, **dadurch gekennzeichnet, dass** ein Zentralkörper (24) in der Achse der Vorrichtung auf einem Großteil ihrer Länge vorgesehen ist, wobei der Zentralkörper auf seiner Oberfläche eine absorbierende Verkleidung, wie in den vorhergehenden Ansprüchen definiert, aufweist.

12. Vorrichtung nach einem der vorhergehenden Ansprüche, **dadurch gekennzeichnet, dass** der Ausgang des Ablassflusses über einen Ablenkungsteil des Flusses in Bezug auf die Eingangsachse erfolgt, wobei der Ablenkungsteil von beliebiger Form auf seiner Innenfläche eine absorbierende Verkleidung, wie in den vorhergehenden Ansprüchen definiert, umfassen kann.

# FIG.1

FIG.2

## FIG.3

## FIG.4

## FIG.5

## FIG.6

## FIG.7

13

# FIG.8